# EUROPÄISCHE PATENTSCHRIFT

(11) **EP 3 999 425 B1**
(45) Veröffentlichungstag und Bekanntmachung des Hinweises auf die Patenterteilung: **28.08.2024**
(21) Anmeldenummer: 20749809.8
(22) Anmeldetag: 09.07.2020
(51) Int. Cl.: B65B 1/00, B65B 39/00, B65B 55/00, B65B 55/02, B65B 57/00, B65B 67/00, B65B 67/12, B25J 21/00, B25J 21/02, F24F 3/163, F24F 3/167

(54) **ABFÜLLSYSTEM UND VERFAHREN ZUM BEFESTIGEN VON BIGBAGS**
FILLING SYSTEM AND METHOD FOR SECURING BIGBAGS
SYSTÈME DE REMPLISSAGE ET PROCÉDÉ POUR FIXER DES BIGBAGS

(30) Priorität: 17.07.2019 DE 102019119322
(43) Veröffentlichungstag der Anmeldung: 25.05.2022
(73) Patentinhaber: Haver & Boecker OHG, 59302 Oelde (DE)
(72) Erfinder: PÄLMKE, Marina, 59329 Wadersloh (DE); SUHR, Ulf, 48165 Münster (DE); KHECHEN, Ali, 48159 Münster (DE); LARSSEN, Heiner, 48565 Steinfurt (DE); HERBSTMANN, Simon, 48653 Coesfeld (DE); KONERT, Martin, 48629 Metelen (DE); BREULMANN, Uwe, 48155 Münster (DE)
(74) Vertreter: BSB Patentanwälte Schütte & Engelen Partnerschaft mbB
(86) Internationale Anmeldenummer: PCT/EP2020/069350
(87) Internationale Veröffentlichungsnummer: WO 2021/008986

(56) Entgegenhaltungen:
- EP-A1- 2 282 941
- EP-A1- 3 335 844
- CA-A1- 3 044 549
- US-A- 3 401 043
- US-A- 5 881 535
- US-A1- 2014 290 162
- US-B1- 10 166 686

## Beschreibung

Die vorliegende Erfindung betrifft ein Abfüllsystem umfassend wenigstens eine Abfüllvorrichtung zum Abfüllen von Schüttgut in Säcke und insbesondere zum Füllen von pulverförmigen bzw. schüttfähigen Lebensmitteln in Bigbags, auch IBC (Intermediate Bulk Container) oder FIBC (Flexible Intermediate Bulk Container) genannt. Die Abfüllvorrichtung umfasst wenigstens einen Füllstutzen, mit welchem wenigstens ein zu füllender Sack durch einen Bediener zum Befüllen verbindbar ist. Das Abfüllsystem umfasst weiterhin wenigstens eine Trennvorrichtung, welche dazu geeignet und ausgebildet ist, wenigstens einen Abfüllbereich der Abfüllvorrichtung von wenigstens einem Arbeitsbereich für einen Bediener abzutrennen. Die vorliegende Erfindung betrifft weiterhin ein Verfahren zum Befestigen wenigstens eines Sackes an wenigstens einem Füllstutzen wenigstens einer Abfüllvorrichtung eines solchen Abfüllsystems bzw. zum Verbinden eines Sackes mit dem Füllstutzen.

Es sind vielfältige Anlagen zum Abfüllen von Schüttgut im Stand der Technik bekannt. Dabei unterscheiden sich die Ausgestaltungen der Anlagen je nach der Art des abzufüllenden Schüttgutes teils erheblich.

Zudem sind Anlagen zum Abfüllen von flüssigen Produkten im Stand der Technik bekannt, beispielsweise die US 3 401 043 A, welche ein Verfahren zum Verpacken von flüssigen Lebensmitteln in flexible Container betrifft. Dokument US 3 401 043 A offenbart ein Abfüllsystem und ein Verfahren zum Befestigen eines Sackes an wenigstens einem Füllstutzen. Dieses Abfüllsystem umfasst wenigstens eine Abfüllvorrichtung zum Füllen von flüssigem Lebensmittel in Säcke und wenigstens eine Trennvorrichtung, wobei die Abfüllvorrichtung wenigstens einen Füllstutzen umfasst, mit welchem wenigstens ein zu füllender Sack durch einen Bediener verbindbar ist, und wobei wenigstens die Trennvorrichtung dazu geeignet und ausgebildet ist, wenigstens einen Abfüllbereich der Abfüllvorrichtung von wenigstens einem Arbeitsbereich für einen Bediener abzutrennen, wobei die Trennvorrichtung wenigstens einen Handhabungsabschnitt mit wenigstens einer Durchführung aufweist, durch welche ein Bediener wenigstens abschnittsweise hindurchgreifen kann, um einen Sack mit dem Füllstutzen zu verbinden.

Gerade beim Abfüllen von schüttfähigen Lebensmitteln und insbesondere im Bereich der Babynahrung bestehen teils erhebliche Anforderungen an die Hygiene beim Abfüllen.

Dazu sind derartige Anlagen je nach Anwendung und Ausgestaltung oft in einem Sicherheitsbereich mit bestimmten bzw. definierten Hygieneanforderungen angeordnet, welcher nur über entsprechende Schleusen erreicht werden kann. Hierdurch kann die Gefahr einer Kontamination bei der Abfüllung bereits relativ gut reduziert werden.

Die abzufüllenden Lebensmittel werden jedoch unter anderem in sogenannte Bigbags abgefüllt, welche oft einen hygienischen bzw. sterilen Inliner und eine festere Außenhülle aufweisen. An der Außenhülle sind dann relativ starre Schlaufen angebracht, mit welchen der Bigbag aufgehängt wird. Dann wird der Sack mit einem Füllstutzen verbunden.

Dieses Anhängen des Bigbags und das Verbinden mit dem Füllstutzen kann jedoch aufgrund der recht starren Ausgestaltung des Bigbags und insbesondere durch die Schlaufen nicht automatisch erfolgen. Der Sack muss von einem Bediener händisch angehängt werden.

Dies führt zu einer möglichen Kontaminationsquelle, da der Bediener in direktem Kontakt zu der Anlage und somit zu dem abzufüllenden Schüttgut steht. Auch wenn der Bediener die vorgeschriebene Schutzkleidung trägt und alle Hygienevorschriften einhält, könnte es unter Umständen zu einer versehentlichen Kontamination kommen.

Es ist deshalb die Aufgabe der vorliegenden Erfindung, die Gefahr von Kontaminationen durch einen Bediener möglichst weit zu reduzieren und/oder einen Bediener von eventuell eingesetzten Inertgasen beim Abfüllen zu schützen.

Diese Aufgabe wird gelöst durch ein Abfüllsystem mit den Merkmalen des Anspruchs 1 und durch ein Verfahren zum Befestigen von Säcken mit den Merkmalen des Anspruchs 14. Bevorzugte Weiterbildungen der Erfindung sind Gegenstand der Unteransprüche. Weitere Vorteile und Merkmale der vorliegenden Erfindungen ergeben sich aus der allgemeinen Beschreibung und der Beschreibung des Ausführungsbeispiels.

Das erfindungsgemäße Abfüllsystem umfasst wenigstens eine Abfüllvorrichtung zum Abfüllen von pulverförmigen oder anders schüttfähigen, rieselfähigen bzw. fließfähigen Produkten und insbesondere Lebensmitteln in Bigbags. Weiterhin umfasst das erfindungsgemäße Abfüllsystem wenigstens eine Trennvorrichtung. Die Abfüllvorrichtung umfasst wenigstens eine Rahmeneinrichtung, an welche ein zu füllender Bigbag angehängt wird, und wenigstens einen Füllstutzen, mit welchem wenigstens ein zu füllender Bigbag durch einen Bediener verbindbar ist bzw. wobei der Bediener den Bigbag an eine geeignete Aufhängung anhängt und den Füllstutzen mit dem Sack verbindet. Wenigstens die Trennvorrichtung ist dazu geeignet und ausgebildet, wenigstens einen Abfüllbereich der Abfüllvorrichtung von wenigstens einem Arbeitsbereich für einen Bediener abzutrennen. Dabei weist die Trennvorrichtung erfindungsgemäß wenigstens einen Handhabungsabschnitt mit wenigstens einer Durchführung auf, durch welche ein Bediener wenigstens abschnittsweise hindurchgreifen kann, um einen an der Rahmeneinrichtung hängenden Bigbag bzw. Sack mit dem Füllstutzen zu verbinden. Weiterhin umfasst die Abfüllvorrichtung mehrere Stationen, wobei die Rahmeneinrichtung fahrbar ausgestaltet ist und in der Abfüllvorrichtung auf wenigstens einer Schiene oder dergleichen zwischen den Stationen verfahren werden kann bzw. verfahrbar ist.

Die Abfüllvorrichtung eignet sich insbesondere zum Abfüllen von pulverförmigen und/oder anderen rieselfähigen bzw. schüttfähigen Lebensmitteln in Bigbags. Dabei ist eine solche Abfüllvorrichtung gerade bei der Verwendung zum Abfüllen von Lebensmitteln vorzugsweise in einem sogenannten High-Care-Bereich angeordnet.

Die Trennvorrichtung trennt den Standort bzw. den Arbeitsbereich eines Bedieners vorzugsweise hygienisch und insbesondere dicht von der Abfüllvorrichtung und insbesondere von dem Abfüllbereich ab, sodass je nach Ausgestaltung keine Kontamination durch einen Bediener stattfinden kann. Dabei wird erfindungsgemäß unter dem Abfüllbereich die Seite von der Trennvorrichtung verstanden, an welcher die Abfüllvorrichtung steht.

Um eine besonders hygienische Abfüllung zu gewährleisten, kann die Abfüllvorrichtung vorzugsweise auch in einem High-Care-Bereich gekapselt vorgesehen sein, wobei dann beispielsweise auch die Verwendung von einem Roboter zweckmäßig sein kann, welcher beim Abfüllprozess bestimmte Handlungen übernimmt.

Die Abfüllvorrichtung umfasst wenigstens einen Füllstutzen, mit welchem wenigstens ein zu füllender Sack bzw. Bigbag durch einen Bediener verbindbar ist. Dabei ist insbesondere bei der Verwendung von Bigbags bevorzugt, dass ein Sack bzw. ein Bigbag mit dafür vorgesehenen Schlaufen oder anderen Verbindungsmitteln in entsprechende Halterungen eingehängt wird, wobei dann auch beispielsweise ein schlauchförmiger Füllabschnitt des Sackes mit einem Füllstutzen in Wirkverbindung gebracht werden kann.

Das erfindungsgemäße Abfüllsystem bietet viele Vorteile. Ein erheblicher Vorteil ist, dass durch das Vorsehen einer Trennvorrichtung zwischen dem Arbeitsbereich für einen Bediener und dem Abfüllbereich der Abfüllvorrichtung eine besonders hygienische und kontaminationsarme bzw. je nach Ausgestaltung auch kontaminationsfreie Abfüllung von Schüttgut gewährleistet werden kann. Dieses ist insbesondere wichtig, wenn Lebensmittel und insbesondere Babynahrung abgefüllt werden.

Dadurch, dass eine Trennvorrichtung zwischen dem Bediener und dem Abfüllbereich vorgesehen ist, wobei der Bediener durch eine Durchführung in dem Handhabungsabschnitt hindurchgreift, ist der frei zugängliche Bereich zu dem Abfüllbereich je nach Ausgestaltung durch die Durchführung minimiert oder beim Vorsehen geeigneter Mittel sogar vollständig hygienisch verschlossen.

Dadurch kann eine besonders hygienische Abfüllung von Schüttgütern bzw. pulverförmigen Lebensmitteln oder dergleichen gewährleistet werden, da die Gefahr für eine versehentliche Kontamination durch einen Bediener minimiert wird oder sogar vollständig ausgeschlossen wird.

Zudem werden Lebensmittel je nach Anforderungen bzw. Hygienestandard in einer Schutzgasatmosphäre bzw. unter Einsatz von Inertgasen abgefüllt. Aufgrund der großen Volumina der Säcke und insbesondere bei Bigbags kann dies zu einer Gefährdung des Bedieners führen.

Durch die Trenneinrichtung ist der Abfüllbereich von dem Bediener getrennt, sodass der Bediener unabhängig von dem im Füllprozess verwendeten Gas oder Gasgemisch einen sicheren Standort hat.

Bevorzugt stellt die Trennvorrichtung wenigstens abschnittsweise eine hygienische Abtrennung zwischen dem Abfüllbereich und dem Arbeitsbereich bereit. Dabei ist insbesondere bevorzugt, dass die Trennvorrichtung insgesamt eine hygienische Abtrennung zwischen dem Abfüllbereich, also der Abfüllvorrichtung, und dem Arbeitsbereich für einen Bediener bereit stellt. Dann ist eine solche hygienische Abtrennung insbesondere derart ausgestaltet, dass eine Kontamination beispielsweise mit Krankheitskeimen durch einen Bediener beim Abfüllen quasi ausgeschlossen ist. Dazu kann die Trennvorrichtung vorzugsweise fluiddicht bzw. luftdicht ausgebildet sein.

Besonders bevorzugt ist die Trennvorrichtung wenigstens abschnittsweise transparent ausgebildet. Dabei ist insbesondere der Handhabungsabschnitt in der Trennvorrichtung wenigstes abschnittsweise transparent ausgebildet, sodass ein Sichtkontakt zwischen dem Arbeitsbereich und dem Abfüllbereich für den Bediener verbleibt. So kann die Trennvorrichtung wenigstens abschnittsweise und insbesondere im Bereich des Handhabungsabschnitts als Art Scheibe oder dergleichen ausgeschaltet sein. Dabei ist es auch möglich, dass die Trennvorrichtung beispielsweise durch eine Wand zur Verfügung gestellt wird, wobei in dieser Wand eine Art Scheibe vorgesehen sein kann, welche den Handhabungsabschnitt bereitstellt oder welche den Handhabungsabschnitt umfasst.

Vorzugsweise besteht die Trennvorrichtung wenigstens abschnittsweise und insbesondere im Bereich des Handhabungsabschnitts aus Glas, Acrylglas und/oder Kunststoff und/oder anderen geeigneten Materialien. Dabei kann die Trennvorrichtung und insbesondere wenigstens der Handhabungsabschnitt beispielsweise scheibenartig ausgebildet sein und/oder auch durch eine Art Folie, insbesondere eine stärke Folie bzw. Plane, bereitgestellt werden, wobei vorzugsweise auch bei allen Ausgestaltungen eine Art Vorhang vorgesehen sein kann.

In zweckmäßigen Weiterbildungen ist die Trennvorrichtung wenigstens abschnittsweise flexibel ausgebildet. Dabei ist die Trennvorrichtung insbesondere im Handhabungsabschnitt flexibel ausgebildet. So kann beispielsweise die Trennvorrichtung bzw. der Handhabungsabschnitt durch eine Folie bzw. eine starke Folie bzw. Plane bereitgestellt werden, welche insbesondere dehnbar und/oder mit Übermaß vorgesehen ist. Dabei ist unter Übermaß zu verstehen, dass die Folie bzw. Plane nicht stramm in die Trennvorrichtung eingespannt ist, sondern ein gewisses Spiel aufweist. So kann der Bediener sich vorzugsweise weit genug nach vorne lehnen, um je nach Ausgestaltung der Abfüllvorrichtung den Sack mit dem Füllstutzen zu verbinden. Dabei kann insbesondere bei der Verwendung von Bigbags die Notwendigkeit bestehen, sich weit in Richtung der Abfüllvorrichtung vorzulegen, um auch die hinteren Schlaufen eines Bigbags mit den entsprechenden Aufhängungen der Abfüllvorrichtung zu verbinden.

Alternativ können auch starre Scheiben oder dergleichen flexibel beispielsweise in einer Faltenbalgeinrichtung gehalten sein.

Bevorzugt weist die Trennvorrichtung wenigstens abschnittsweise wenigstens eine Ausformung auf. Dabei ist diese Ausformung insbesondere in dem bzw. an dem Handhabungsabschnitt vorgesehen. Auch durch eine derartige Ausformung kann erreicht werden, dass ein Bediener sich näher bzw. weiter in Richtung der Abfüllvorrichtung vorlehnen kann, sodass ein Sack komfortabel an den Füllstutzen angehängt werden kann.

Besonders bevorzugt ist wenigstens ein wenigstens abschnittsweise flexibles Trennelement an der Durchführung angeordnet, welches den Abfüllbereich von dem Arbeitsbereich trennt. Insbesondere durch eine derartige Ausgestaltung kann eine vollständig den Arbeitsbereich von dem Abfüllbereich isolierende Trennvorrichtung zur Verfügung gestellt werden, wobei auch die Durchführung oder die Durchführungen jeweils durch ein entsprechendes Trennelement abgedichtet werden. Dabei ist ein Trennelement insbesondere derart ausgebildet, dass ein Bediener weiterhin durch die Durchführung hindurchgreifen kann, wobei das Trennelement sich dann um die Hände bzw. die Arme des Bedieners anlegt, sodass ein Bediener mit seinen Armen bzw. Händen in dem Abfüllbereich arbeiten kann. Dabei ist ein solches Trennelement vorzugsweise an der Durchführung bzw. in der Durchführung vorgesehen. Je nach Ausgestaltung können in einer größeren Durchführung auch zwei getrennte Trennelemente vorgesehen sein. Es ist aber auch möglich, dass mehrere bzw. insbesondere zwei Durchführungen vorgesehen sind, welche jeweils mit einem flexiblen Trennelement ausgestattet sind.

In zweckmäßigen Weiterbildungen umfasst das Trennelement wenigstens einen Handschuh. Dabei kann das Trennelement insbesondere durch einen Handschuh zur Verfügung gestellt werden. Über einen mit der Durchführung verbundenen Handschuh kann auf einfache Art und Weise eine hygienisch abgetrennte Verbindung zwischen Arbeitsbereich und Abfüllbereich bereitgestellt werden. Dabei greift ein Bediener vom Arbeitsbereich aus durch die Handschuhe hindurch bzw. in die Handschuhe hinein und kann durch die Handschuhe abgetrennt in dem Abfüllbereich arbeiten bzw. den Sack mit dem Füllstutzen verbinden.

Bevorzugt ist das Trennelement wenigstens abschnittsweise wechselbar ausgestaltet. So kann beispielsweise bei einem Handschuh die Verwendung von einem Innenhandschuh und einem Außenhandschuh vorgesehen sein, wobei der Innenhandschuh und/oder der Außenhandschuh je nach Bedarf wechselbar sind. Dabei sind diese insbesondere zu wechseln bzw. auszutauschen, wenn eine Undichtigkeit festgestellt wurde oder bevorsteht. Dazu können je nach Ausgestaltung auch bestimmte Überwachungssysteme vorgesehen sein. Insbesondere bei der Verwendung von einem Wechselhandschuh ist es beispielsweise bevorzugt, dass ein mehrlagiger Handschuh verwendet wird, wobei eine Undichtigkeit der Außen- bzw. Innenseite des Handschuhs über bestimmte Systeme überprüft wird. Beispielsweise kann ein Fluid zwischen Innenhandschuh und Außenhandschuh hindurch geleitet werden, wobei bei einer Undichtigkeit beispielsweise über einen Druckabfall oder eine Spannungsüberwachung auf eine Undichtigkeit zurückgeschlossen werden kann.

Besonders bevorzugt ist der wenigstens einen Durchführung wenigstens eine Verschlusseinrichtung zugeordnet. Eine derartige Verschlusseinrichtung dient dazu, die Durchführung vorzugsweise hygienisch abzudichten, beispielsweise um die Durchführung bei Nichtnutzung besonders sicher zu verschließen und/oder bei der Wartung und/oder beim Wechsel der Trennelemente bzw. von Handschuhen zu verschließen, sodass vorzugsweise zu keiner Zeit eine Verbindung zwischen Abfüllbereich und Arbeitsbereich besteht.

In zweckmäßigen Ausgestaltungen ist der Arbeitsbereich für einen Bediener und/oder die Abfüllvorrichtung über wenigstens eine Schleuseneinrichtung erreichbar. Dabei ist das erfindungsgemäße Abfüllsystem vorzugsweise nach einem bestimmten Zonenkonzept aufgebaut, wobei man über mehrere Sicherheitsstufen in einen bestimmten Sicherheitsbereich eintritt, beispielsweise von einem Low-Care-Bereich, über einen Medium-Care-Bereich bis in einen High-Care-Bereich. Zwischen diesen einzelnen Bereichen kann je nach Ausführung und Anforderung wenigstens eine Schleuse bzw. wenigstens eine Schleuseneinrichtung vorgesehen sein. Über solche Schleuseneinrichtungen wird der eine Sicherheitsbereich von dem nächsten gemäß der anzuwendenden Bestimmungen abgetrennt.

Bevorzugt ist der Arbeitsbereich für einen Bediener in wenigstens einer Schleuseneinrichtung angeordnet. Bei einer solchen Ausgestaltung kann beispielsweise der Arbeitsbereich in der Schleuseneinrichtung zu dem High-Care-Bereich vorgesehen sein, in welchem die Abfüllvorrichtung vorzugsweise angeordnet ist. Der Zugang für den Bediener zu der Abfüllvorrichtung erfolgt dann durch die Durchführung in der Trennvorrichtung, welche zwischen der Schleuseneinrichtung und dem High-Care-Bereich angeordnet ist. Das Vorsehen von Trennelementen, beispielsweise geeignete Handschuhe, in den Durchführungen kann eine geeignete hygienische Abtrennung zwischen der Schleuseneinrichtung und dem High-Care-Bereich gewährleisten.

In bevorzugten Weiterbildungen sind die Abfüllvorrichtung und/oder der Arbeitsbereich für einen Bediener in einem High-Care-Bereich angeordnet. Dabei ist insbesondere bevorzugt, dass wenigstens die Abfüllvorrichtung in einem High-Care-Bereich bzw. in einem Bereich mit einer noch höheren bzw. höchsten Sicherheitsstufe angeordnet ist. Auch bei der Anordnung der Abfüllvorrichtung und dem Arbeitsbereich für einen Bediener in einem High-Care-Bereich kann durch das Vorsehen einer Trennvorrichtung zwischen dem Abfüllbereich und dem Arbeitsbereich eine noch größere Sicherheit erreicht werden bzw. die Gefahr von Kontamination noch weiter minimiert werden.

Besonders bevorzugt ist die Abfüllvorrichtung in einem High-Care-Bereich angeordnet und der Arbeitsbereich für einen Bediener in wenigstens einer Schleuseneinrichtung.

Erfindungsgemäß umfasst die Abfüllvorrichtung wenigstens eine Rahmeneinrichtung, an welche der zu füllende Sack bzw. Bigbag angehängt wird. Dabei ist die Rahmeneinrichtung erfindungsgemäß fahrbar ausgestaltet, wobei wenigstens eine Rahmeneinrichtung in der Abfüllvorrichtung auf wenigstens einer Schiene oder dergleichen hin und her verschoben bzw. verfahren werden kann. Bei einer solchen Ausgestaltung mit fahrbaren Rahmeneinrichtungen können vorzugsweise mehrere Stationen, beispielsweise eine Anhängestation, eine Füllstation und/oder eine Ruhestation vorgesehen sein.

Bevorzugt ist der Trennvorrichtung und/oder der Abfüllvorrichtung wenigstens eine Hilfseinrichtung zugeordnet. Eine solche Hilfseinrichtung ist insbesondere als Verlängerung der Hand bzw. des Armes des Bedieners gedacht. Diese dient insbesondere als Aufhängehilfe und kann vorzugsweise als Stab bzw. stabähnlich ausgebildet sein, um beispielsweise bei einem Bigbag die hinteren Schlaufen an entsprechende Aufhängungen aufhängen zu können.

Vorzugsweise ist die Hilfseinrichtung an der Trennvorrichtung und/oder der Abfüllvorrichtung aufgenommen, insbesondere an der Rahmeneinrichtung. Hierdurch wird sichergestellt, dass die Hilfseinrichtung nicht unkontrolliert bzw. ungewollt an ungünstige Stellen der Abfüllvorrichtung kommen kann und so den Abfüllprozess stört oder sogar eine Schädigung an der Abfüllvorrichtung und/oder Trennvorrichtung verursachen kann. Dabei ist die Hilfseinrichtung bevorzugt verliersicher mit der Abfüllvorrichtung, insbesondere mit der Rahmeneinrichtung, und/oder mit der Trennvorrichtung verbunden. Dazu kann die Hilfseinrichtung z. B. an einem Seil oder dergleichen aufgehängt sein.

Bevorzugt umfasst die Abfüllvorrichtung mehrere Stationen, wobei insbesondere an wenigstens zwei Stationen wenigstens ein Handhabungsabschnitt in der wenigstens einen Trennvorrichtung vorgesehen ist. Dabei kann beispielsweise eine Position zum Anhängen eines leeren Sackes vorgesehen sein, von wo aus der angehängte Sack zu einer Füllstation überführt wird. Nach dem Füllen kann beispielsweise der Sack in eine Ruheposition überführt werden, in welcher er nach einer gewissen Ruhephase von den Füllstutzen abgehängt und aus der Abfüllvorrichtung entnommen wird.

In vorteilhaften Ausgestaltungen ist wenigstens eine Sackzufuhreinrichtung zum Zuführen von insbesondere leeren Säcken zu der Abfüllvorrichtung vorgesehen ist. Eine solche Zufuhreinrichtung ist insbesondere dann vorteilhaft, wenn die Füllanlage abgekapselt von dem Bediener vorgesehen ist bzw. wenn der Bediener die Abfüllvorrichtung von seinem Arbeitsbereich durch die Trennvorrichtung nicht direkt erreichen kann. Eine Zuführeinrichtung kann beispielsweise als Art Schublade ausgeführt sein, in die die noch verpackten Leersäcke von dem Arbeitsbereich aus eingelegt werden und erst dann aus der letzten Schutzhülle herausgeholt werden, wenn der Sack der Abfüllvorrichtung und/oder dem High-Care-Bereich zugeführt wird. Dabei werden die Leersäcke bei einer bevorzugten Ausgestaltung unmittelbar vor dem Einlegen in die Lade bzw. Schublade aus der Schutzverpackung entnommen. Die entpackten Säcke werden in die Lade gelegt. Der verschlossene Inliner wird in einer Vorrichtung geklemmt. Der Zugang der Lade wird verschlossen.

In zweckmäßigen Weiterbildungen umfasst die Sackzufuhreinrichtung wenigstens ein Schleusentor. So kann, insbesondere wenn der Arbeitsbereich für den Bediener nicht in dem High-Care-Bereich vorgesehen ist, sondern beispielsweise in der Schleuse vor dem High-Care-Bereich, ein Sack hygienisch und sicher zugeführt werden. Dann können beispielsweise zwei Schleusentore vorgesehen sein, ein Schleusentor zum Arbeitsbereich und ein Schleusentor zum Abfüllbereich. Das Einschleusen kann dann nach den erforderlichen Standards erfolgen.

Bevorzugt ist wenigstens eine Abnahmeeinrichtung vorgesehen. Eine derartige Abnahmeeinrichtung dient insbesondere zum automatischen Abnehmen des Sacks bzw. zum Aushaken eines gefüllten Bigbags von entsprechenden Haken. Insbesondere beim Vorsehen einer Abnahmeeinrichtung müssen dann an einer Position für das Abnehmen eines Sacks bzw. Bigbags keine Durchführungen für einen Bediener in der Trennvorrichtung vorhanden sein.

Vorteilhaft ist, wenn wenigstens eine Sackabfuhreinrichtung zum Abführen von vollen Säcken aus der Abfüllvorrichtung vorgesehen ist. Dabei umfasst die Sackabfuhreinrichtung dann bevorzugt wenigstens eine Verschlusseinrichtung wie beispielsweise eine Schweißeinrichtung, wenigstens eine Fördereinrichtung und/oder wenigstens ein Schleusentor.

Bei einer solchen Ausgestaltung wird beispielsweise, je nach Ausgestaltung, nach dem Füllen des Sackes ein Förderband der Fördereinrichtung bis unter den Sack angehoben, sodass die Aufhängung bzw. die Schlaufen des Sackes entlastet werden. Der Sack bzw. Bigbag ruht dann auf dem Förderband, sodass sich das Produkt beruhigen und absetzen kann und die überschüssige Luft aus dem Sack bzw. dem Produkt entweichen kann und der Sack an Stabilität gewinnt. Im Anschluss werden vorzugsweise die Schlaufen des Sackes ausgehängt oder andere Befestigungen entfernt. Der Sack wird vorzugsweise verschlossen. Dabei wird bei Bigbags vorzugsweise der Inliner mittels wenigstens einer Schweißeinheit verschlossen. Anschließend wird der gefüllte Sack über das Förderband durch ein Schleusentor auf ein weiteres Förderband innerhalb der Schleuse übergeben. Das Schleusentor schließt sich und erst dann öffnet sich das zweite Tor, sodass der Sack auf ein Förderband je nach Ausgestaltung im Medium-Car-Bereich übergeben werden kann.

Das erfindungsgemäße Verfahren eignet sich zum Befestigen wenigstens eines Sacks, insbesondere eines Bigbags an wenigstens einen Füllstutzen wenigstens einer Abfüllvorrichtung eines Abfüllsystems, wie es zuvor beschrieben wurde. Dabei greift ein Bediener durch die wenigstes eine Durchführung in dem Handhabungsabschnitt der Trennvorrichtung wenigstens abschnittsweise hindurch, um den an der Rahmeneinrichtung hängenden Bigbag bzw. Sack mit dem Füllstutzen zu verbinden.

Dabei kann ein Bediener vorzugsweise mit einer Hand bzw. einen Arm durch die Durchführung greifenden und den Sack anhängen. Je nach Ausgestaltung kann eine große Durchführung für beide Arme bzw. können zwei Durchführungen für jeweils einen Arm des Bedieners vorgesehen sein.

Auch das erfindungsgemäße Verfahren bietet die Vorteile, wie sie zuvor schon zu dem Abfüllsystem ausgeführt wurden.

Bevorzugt greift der Bediener in wenigstens ein Trennelement, insbesondere in wenigstens einen Handschuh ein, um durch die Trennvorrichtung bzw. die Durchführung in den Abfüllbereich zu gelangen. So kann der Bediener, obwohl er durch die Trennvorrichtung von der Abfüllvorrichtung separiert ist, den Sack an den Füllstutzen anhängen bzw. den Sack mit dem Füllstutzen verbinden.

Besonders bevorzugt wird ein Sack durch den Bediener mit wenigstens einer Schlaufe an wenigstens eine Rahmeneinrichtung angehängt, wobei vorzugsweise die Schlaufe mittels wenigstes einer Hilfseinrichtung an die Rahmeneinrichtung angehängt wird. Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1: eine rein schematische Darstellung eines erfindungsgemäßen Abfüllsystems in einer Draufsicht;
- Fig. 2: eine rein schematische Darstellung eines erfindungsgemäßen Abfüllsystems in einer perspektivischen Ansicht;
- Fig. 3: eine rein schematische Darstellung eines Ausführungsbeispiels erfindungsgemäßen Abfüllsystems in einer Draufsicht;
- Fig. 4: eine rein schematische Darstellung eines Ausführungsbeispiels erfindungsgemäßen Abfüllsystems in einer Seitenansicht;
- Fig. 5: eine rein schematische Darstellung eines Ausführungsbeispiels erfindungsgemäßen Abfüllsystems in einer Seitenansicht mit einer Vergrößerung des Bereichs der Trennvorrichtung;
- Fig. 6: eine rein schematische Darstellung einer Trennvorrichtung mit Trennelementen;
- Fig. 7: eine rein schematische Darstellung eines Ausführungsbeispiels erfindungsgemäßen Abfüllsystems in einer Draufsicht mit einer Vergrößerung des Bereichs der Trennvorrichtung;
- Fig. 8: eine rein schematische Darstellung einer Rahmeneinrichtung in einer perspektivischen Ansicht;
- Fig. 9: eine rein schematische Darstellung einer Rahmeneinrichtung in einer weiteren perspektivischen Ansicht;
- Fig. 10: eine rein schematische Darstellung einer Rahmeneinrichtung in einer anderen perspektivischen Ansicht; und
- Fig. 11: eine rein schematische Darstellung einer Rahmeneinrichtung in Ansicht von unten.

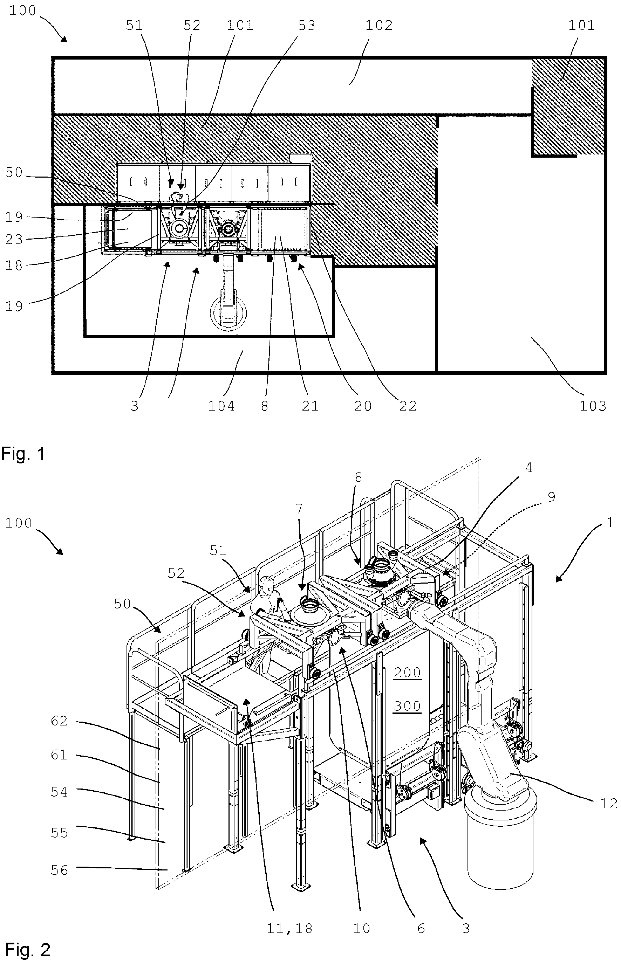

In Figur 1 ist rein schematisch ein erfindungsgemäßes Abfüllsystem 100 in einer Draufsicht dargestellt. Dabei erkennt man in der hier gezeigten Darstellung, dass das gezeigte Ausführungsbeispiel des erfindungsgemäßen Abfüllsystems 100 eine in ein Sicherheitszonenkonzept integrierte Abfüllvorrichtung 1 umfasst. Dabei ist zu erkennen, dass die Abfüllvorrichtung 1 in einem High-Care-Bereich 104 angeordnet ist, welcher über einen Low-Care-Bereich 102 und einen Medium-Care-Bereich 103 durch zwei Schleuseneinrichtungen 101 erreicht werden kann.

Die erfindungsgemäße Abfüllvorrichtung 1 ist dabei zum Abfüllen von Schüttgütern in Säcke 200 vorgesehen, wobei hier in dem gezeigten Ausführungsbeispiel pulverförmige bzw. rieselfähige bzw. schüttfähige bzw. fließfähige Lebensmittel in Bigbags 300 abgefüllt werden.

Gerade im Bereich der Lebensmittelabfüllung und insbesondere im Bereich der Babynahrung sind besondere Vorkehrungen für eine geeignete hygienische Umgebung zum Abfüllen zwingend erforderlich. Hierdurch wird es je nach Anforderung nötig, die Abfüllvorrichtung in einem wie zuvor beschriebenen Sicherheitszonenkonzept anzuordnen.

In Figur 1 ist weiterhin zu erkennen, dass eine Trennvorrichtung 50 vorgesehen ist, welche den Arbeitsbereich 51 für einen Bediener von dem Abfüllbereich 3 der Abfüllvorrichtung 1 abtrennt.

Dabei ist in dem hier gezeigten Ausführungsbeispiel die gesamte Abfüllvorrichtung 1 gekapselt in dem High-Care-Bereich 104 vorgesehen, wobei der Bediener auch in dem High-Care-Bereich 104 steht bzw. der Arbeitsbereich 51 für den Bediener in diesem High-Care-Bereich vorgesehen ist.

In dem hier gezeigten Ausführungsbeispiel werden Lebensmittel in einer Schutzgasatmosphäre bzw. unter Einsatz von Inertgas abgefüllt. Dazu wird das Sackvolumen mit Schutzgas bzw. Inertgas aufgeblasen. Hierzug wird der an den Füllstutzen 2 angehängte Sack 200 mit Inertgas aufgeblasen bzw. vorgeformt, sodass er im Anschluss optimal befüllt werden kann.

Aufgrund der teils großen Volumina der Säcke 200, insbesondere bei Bigbags 300, kann dies zu einer Gefährdung des Bedieners führen. Durch die Trenneinrichtung 50 ist der Abfüllbereich 3 von dem Bediener bzw. dem Arbeitsbereich 51 getrennt, sodass der Bediener unabhängig von dem im Füllprozess verwendeten Gas oder Gasgemisch sicher arbeiten kann.

Die Abfüllvorrichtung 1 umfasst in dem hier gezeigten Ausführungsbeispiel mehrere Stationen. Dabei ist in Figur 1 eine Zufuhreinrichtung 18 angedeutet, welche insbesondere in solchen Ausgestaltungen des erfindungsgemäßen Abfüllsystems 100 vorteilhaft ist, bei welchen die Abfüllanlage 1 abgekapselt von dem Bediener vorgesehen ist bzw. wenn der Bediener die Abfüllvorrichtung 1 von seinem Arbeitsbereich 51 durch die Trennvorrichtung 50 nicht direkt erreichen kann.

Die Zuführeinrichtung 18 umfasst hier eine Schublade 23, in die die noch hygienisch bzw. steril verpackten Leersäcke von dem Arbeitsbereich 51 aus durch den Bediener eingelegt werden und erst dann aus der letzten Schutzhülle herausgeholt werden, wenn der Sack 200 der Abfüllvorrichtung 1 zugeführt wurde. Dazu werden die Leersäcke 200 hier unmittelbar vor dem Einlegen in die Schublade 23 aus der Schutzverpackung entnommen. Die entpackten Säcke 200 werden in die Schublade 23 gelegt. Der verschlossene Inliner wird in einer Vorrichtung geklemmt. Der Zugang der Schublade 23 wird verschlossen und der Sack wird der Abfüllvorrichtung 1 zugeführt.

Dabei ist die Zufuhreinrichtung 18 auch als Schleuse ausgebildet und umfasst hier zwei Schleusentore 19, wobei ein Schleusentor 19 vom Arbeitsbereich 51 zugänglich ist und ein Schleusentor 19 zum Abfüllbereich 3 gerichtet ist. Das Einschleusen kann dann nach den erforderlichen Standards erfolgen.

Weiterhin ist in Figur 1 dargestellt, dass eine Sackabfuhreinrichtung 20 zum Abführen der vollen Säcke 200 vorgesehen ist.

Dabei umfasst die Sackabfuhreinrichtung 20 hier eine nicht näher dargestellte Verschlusseinrichtung und eine Fördereinrichtung 21.

In dem gezeigten Ausführungsbeispiel wird nach dem Füllen des Sackes 200 ein Förderband der Fördereinrichtung 21 bis unter den Sack 200 angehoben, sodass die Aufhängung bzw. die Schlaufen 201 des Sackes 200 entlastet werden.

Der Sack 200 bzw. Bigbag 300 ruht dann auf dem Förderband, sodass sich das Produkt beruhigen und absetzen kann und die überschüssige Luft aus dem Sack bzw. dem Produkt entweichen kann und der Sack an Stabilität gewinnt. Im Anschluss werden die Schlaufen 201 des Sackes 200 ausgehängt oder andere Befestigungen entfernt.

Der Sack wird dann mittels der Verschlusseinrichtung verschlossen. Dabei wird hier bei einem Bigbag 300 der Inliner mittels einer Schweißeinheit verschlossen.

Um auch beim Entnehmen der Säcke 200 aus der Abfüllvorrichtung möglichst hygienisch zu arbeiten, wird der gefüllte Sack 200 über das Förderband durch ein Schleusentor 22 der Sackabfuhreinrichtung 20 auf ein weiteres Förderband innerhalb der Schleuse übergeben. Das Schleusentor 22 schließt sich und erst dann öffnet sich das zweite Tor 22, sodass der Sack 200 dann auf ein nächstes Förderband je nach Ausgestaltung im High-Care-Bereich oder im Medium-Car-Bereich übergeben werden kann.

In Figur 2 sind in einer rein schematischen Darstellung die Abfüllvorrichtung 1 und der Arbeitsbereich 51 für einen Bediener in einer perspektivischen Ansicht dargestellt, wobei man hier gut erkennt, dass der Arbeitsbereich 51 für einen Bediener von dem Abfüllbereich 3 durch eine Trennvorrichtung 50 abgetrennt ist. Die Trennvorrichtung 50 weist dabei dem hier gezeigten Ausführungsbeispiel einen Handhabungsabschnitt 52 auf, wobei dieser Handhabungsabschnitt 52 bzw. die Trennvorrichtung 50 im Bereich des Handhabungsabschnitts 52 transparent ausgebildet ist. Dazu ist die Trennvorrichtung 50 hier als Scheibe 61 ausgebildet, welche je nach Ausgestaltung z. B. aus Glas 54, Acrylglas 55 oder auch Kunststoff 56 bestehen kann bzw. diese Materialien umfassen kann. Es ist auch möglich, die Trennvorrichtung 50 wenigstens abschnittsweise als stabile Folie 62 auszubilden.

In dem hier gezeigten Ausführungsbeispiel werden mithilfe der Abfüllvorrichtung 1 pulverförmige Lebensmittel in Säcke 200 bzw. Bigbags 300 gefüllt. Dazu werden die Bigbags 300 mit Schlaufen 201 an eine Rahmeneinrichtung 4 angehängt. In dem gezeigten Ausführungsbeispiel sind die Rahmeneinrichtungen 4 fahrbar vorgesehen, wobei die Rahmeneinrichtungen 4 auf Schienen 10 in dem hier gezeigten Ausführungsbeispiel mehrere Stationen durchlaufen.

Weiterhin sind die Rahmeneinrichtungen 4 auf einem erhöhten Gerüst aufgenommen, sodass ein Bigbags 300 an einer Rahmeneinrichtung 4 im Wesentlichen frei hängen können.

Die Abfüllvorrichtung 1 umfasst in dem hier gezeigten Ausführungsbeispiel eine erste Station 11 bzw. eine Zuführeinrichtung 18, mittels welcher ein noch leerer und zusammengefalteter Sack 200 bzw. Bigbag 300 der Abfüllvorrichtung 1 zugeführt wird.

An einer Anhängestation 6 wird der Sack an eine Rahmeneinrichtung 4 angehängt. Mittels eines Roboters 12 wird die Rahmeneinrichtung 4 mit dem angehängten Bigbag 300 zu einer Füllstation 7 verbracht. Nach erfolgter Füllung wird die Rahmeneinrichtung 4 mit dem gefüllten Bigbag 300 in eine Ruhestation 8 bewegt, in welcher sich das pulverförmige Lebensmittel in dem Bigbag setzen kann. Nach einer gewissen Ruhephase wird der Sack 200 in dem hier gezeigten Ausführungsbeispiel nach rechts aus der Abfüllvorrichtung 1 ausgefördert.

Dann kann je nach Ausgestaltung die frei gewordene Rahmeneinrichtung 4 von dem Roboter 12 gegriffen und erneut der Anhängestation 6 oder einer Zwischenlagerstation zugeführt werden.

Um den vollständig gefüllten Bigbag aus der Abfüllvorrichtung 1 auszuschleusen, müssen die Schlaufen 201 wieder von der Rahmeneinrichtung 4 bzw. entsprechenden Aufhängung abgenommen werden. Hierfür ist in diesem Ausführungsbeispiel eine nicht näher dargestellte Abnahmeeinrichtung 9 vorgesehen, welche vorzugsweise automatisch die Schlaufen 201 wieder von der Rahmeneinrichtung 4 bzw. den Haken 13 trennt bzw. diese aushakt. Weiterhin ist eine Sackabfuhreinrichtung 20 vorgesehen.

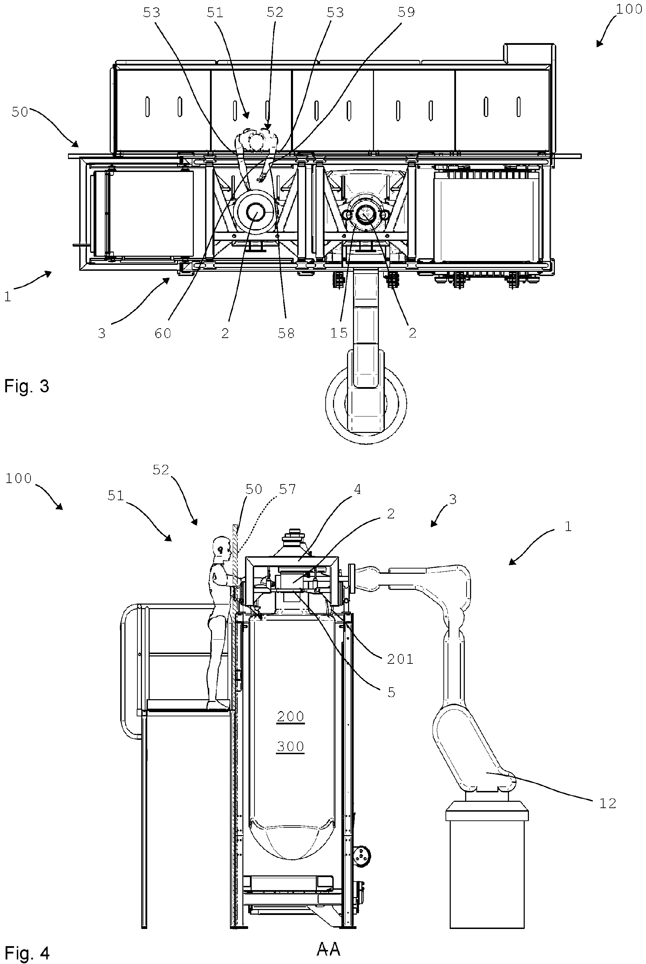

In Figur 3 ist rein schematisch das Abfüllsystem 100 in einer Ansicht von oben dargestellt. Hier erkennt man erneut die Abfüllvorrichtung 1 mit dem Abfüllbereich 3, wobei der Abfüllbereich 3 mittels einer Trennvorrichtung 50 von dem Arbeitsbereich 51 für einen Bediener isoliert ist.

Damit ein Bediener dennoch von dem Arbeitsbereich 51 in den Abfüllbereich 3 eingreifen kann, um den Sack 200 bzw. den Bigbag mit dem Füllstutzen 2 der Abfüllvorrichtung 1 zu verbinden bzw. den Sack an die Rahmeneinrichtung 4 anzuhängen, sind in dem Handhabungsabschnitt 52 in dem hier gezeigten Ausführungsbeispiel zwei Durchführungen 53 in der Trennvorrichtung 50 vorgesehen.

Durch diese Durchführung 53 kann ein Bediener in den Abfüllbereich 3 eingreifen. Durch die Trennvorrichtung 50 wird verhindert, dass der Bediener den Abfüllbereich 3 versehentlich kontaminiert.

Je nach den gewünschten oder vorgeschriebenen Sicherheitsanforderungen können in diesen Durchführungen 53 Trennelemente 58 vorgesehen sein, welche eine hygienische und vollständige Abdichtung der Trennvorrichtung 50 bewirken.

Ein solches Trennelement 58 kann beispielsweise als Silikoninlay ausgebildet sein, welches sich beim Hineingreifen an die Hände bzw. Arme des Bedieners anpasst und so eine hygienische isolierte Durchführung der Hand bzw. des Arms des Bedieners durch die Durchführung 53 ermöglicht. In dem gezeigten Ausführungsbeispiel werden die Trennelemente 58 jedoch durch mit den Durchführungen 53 verbundene Handschuhe 59 bereitgestellt.

Die Handschuhe 59 können beispielsweise auch mehrlagig ausgebildet sein, sodass eine besonders zuverlässige Abdichtung des Abfüllbereichs 3 von dem Arbeitsbereich 51 gewährleistet ist.

Je nach Ausgestaltung können auch Verschlusseinrichtungen 60 an den Durchführungen 53 vorgesehen sein, sodass es insbesondere bei einem Nichtbetrieb der Anlage oder einem Produktwechsel bzw. wenn ein Bediener die Arme bzw. Hände nicht durch die Durchführung 53 hindurchgeführt hat, möglich ist, die Durchführung 53 zu verschließen. Das Verschließen der Durchführung 53 kann insbesondere auch bei Wartungsarbeiten bzw. beim Wechsel oder auch einen eventuellen Defekt der Handschuhe 59 bzw. eines Trennelements 58 vorteilhaft sein.

In Figur 4 ist rein schematisch ein erfindungsgemäßes Abfüllsystem 100 in einer Ansicht von der Seite dargestellt. Auch hier erkennt man die Trennvorrichtung 50, welche den Abfüllbereich 3 von dem Arbeitsbereich 51 für einen Bediener abtrennt.

In den Figuren 3 und 4 ist zudem zu erkennen, dass die Rahmeneinrichtung 4 im Wesentlichen V-förmig ausgebildet ist, bzw. dass in dem dem Bediener zugewandten Teil der Rahmeneinrichtung 4 eine Freimachung bzw. Freilassung vorgesehen ist, sodass der Bediener sich möglichst weit bis in die Rahmeneinrichtung 4 hinein lehnen kann. Dies ist notwendig, um möglichst nah an die hinteren Aufnahmen für die Schlaufen 201 eines Sackes 200 bzw. des Bigbags 300 zu gelangen, um die Schlaufen 201 einzuhängen.

Damit ein Bediener dies schaffen kann, ist die Trennvorrichtung 50 in dem hier gezeigten Ausführungsbeispiel in dem Bereich des Handhabungsabschnitts 53 im Wesentlichen flexibel ausgebildet, sodass sich der Bediener in den Handhabungsabschnitt 52 bzw. in die Trennvorrichtung 50 hineinlehnen kann und so weiter in Richtung der hinteren Aufnahmen für die Schlaufen 201 gelangt.

Bei einer derartigen Ausgestaltung kann die Trennvorrichtung 50 bzw. wenigstens der Handhabungsabschnitt 52 wenigstens abschnittsweise beispielsweise aus einer dicken Folie oder Plane bestehen, die insbesondere im Übermaß in diesem Abschnitt vorgesehen ist. Hierunter ist insbesondere zu verstehen, dass die Folie bzw. die Trennvorrichtung 50 in dem Bereich des Handhabungsabschnitts 20 nicht stramm gespannt vorliegt. Bei dem Verwenden einer Folie bzw. Plane ist die dann wenigstens abschnittsweise transparent ausgebildet, sodass Sichtkontakt zwischen dem Arbeitsbereich 51 und dem Abfüllbereich 3 besteht.

Alternativ kann auch im Sichtbereich eine starre Scheibe bzw. Fensteröffnung flexibel in einer Plane oder dergleichen aufgenommen sein.

Alternativ kann die notwendige Bewegungsfreiheit für einen Bediener auch durch eine nicht näher dargestellte Ausformung 57 in der Trennvorrichtung 50 bzw. in dem Handhabungsabschnitt 52 bereitgestellt werden. Dies ist insbesondere dann zweckmäßig, wenn die Trennvorrichtung 50 nicht im Wesentlichen flexibel in diesem Bereich ausgestaltet ist.

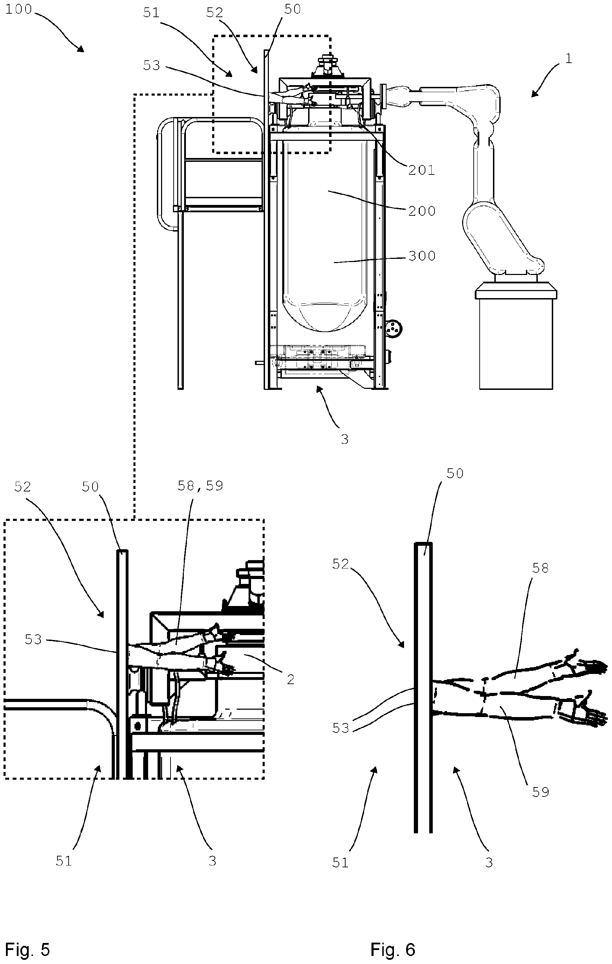

In den Figuren 5 und 6 ist rein schematisch dargestellt, dass die Trennvorrichtung 50 im Bereich des Handhabungsabschnitts 52 Durchführungen 53 aufweist, in bzw. an welchen in dem hier gezeigten Ausführungsbeispiel Handschuhe 59 als Trennvorrichtung 58 vorgesehen sind.

Diese verbleiben in dem gezeigten Ausführungsbeispiel in den Durchführungen 53 sodass ein Bediener schnell durch das Hineingleiten in die Handschuhe 59 von dem Arbeitsbereich 51 in den Abfüllbereich 53 gelangen kann, um einen Sack 200 mit einem Füllstutzen 2 zu verbinden.

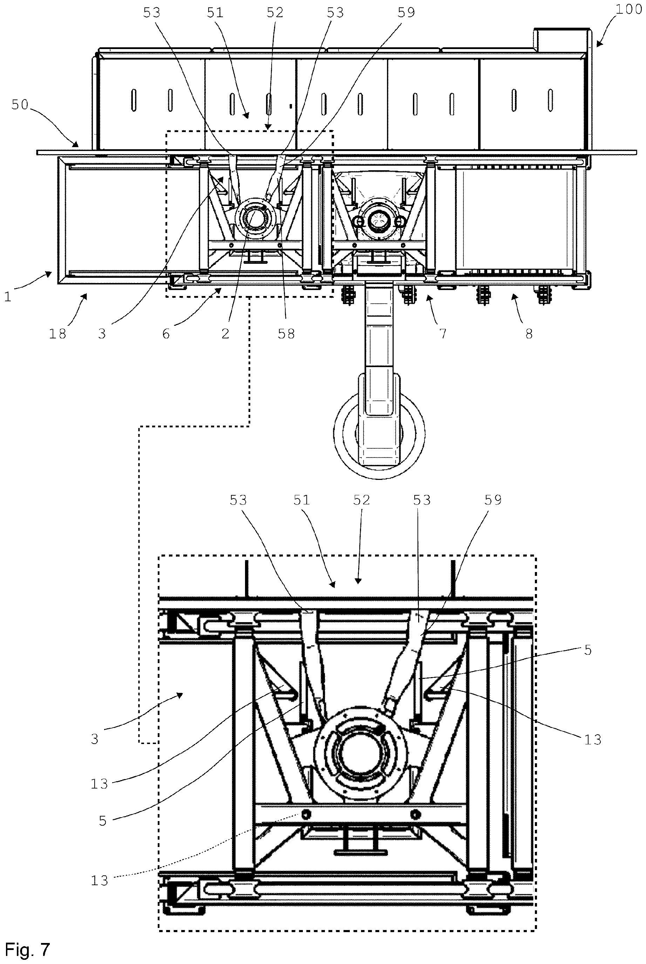

In Figur 7 ist noch einmal ein erfindungsgemäßes Abfüllsystem 100 in einer Draufsicht von oben dargestellt. Dabei sind insbesondere in dem vergrößerten Ausschnitt die Aufnahmen 13 bzw. die vorderen Aufnahmen 13 für die Schlaufen 201 eines Sackes 200 zu erkennen.

Wie durch die Handschuhe 59 ersichtlich, kann ein Bediener, welcher von dem Arbeitsbereich 51 über die Handschuhe 59 in den Abfüllbereich 3 eingreift, die Schlaufen 201 eines Sackes 200 in die Aufnahmen 13 einhängen. Die weiter hinten liegenden Aufnahmen 13 sind in der hier gezeigten Ansicht nicht zu erkennen, jedoch ist ersichtlich, dass ein Bediener sich wenn überhaupt nur mit großer Mühe so weit nach vorne beugen kann, um die hinteren Schlaufen 201 des Sacks 200 in die hinteren Aufnahmen 13 einzuhaken. Dies ist insbesondere auch nur dann möglich, wenn der Handhabungsabschnitt 52 flexibel ausgestattet ist und/oder eine entsprechende Ausformung 57 aufweist. Alternativ können die Haken auch schwenkbar ausgeführt sein.

Um dennoch eine komfortable Bedienung der Anlage zu gewährleisten und um auch die hinteren Schlaufen 201 mit den entsprechenden Aufnahmen 13 zu verbinden, sind in dem hier gezeigten Ausführungsbeispiel links und rechts Hilfseinrichtungen 5 vorgesehen. Mittels dieser Hilfseinrichtung 5, welche der Bediener leicht ergreifen kann, können die hinteren Schlaufen 201 leicht auf die entsprechenden Aufnahmen 13 aufgebracht bzw. in diese eingehakt werden und wieder abgenommen werden.

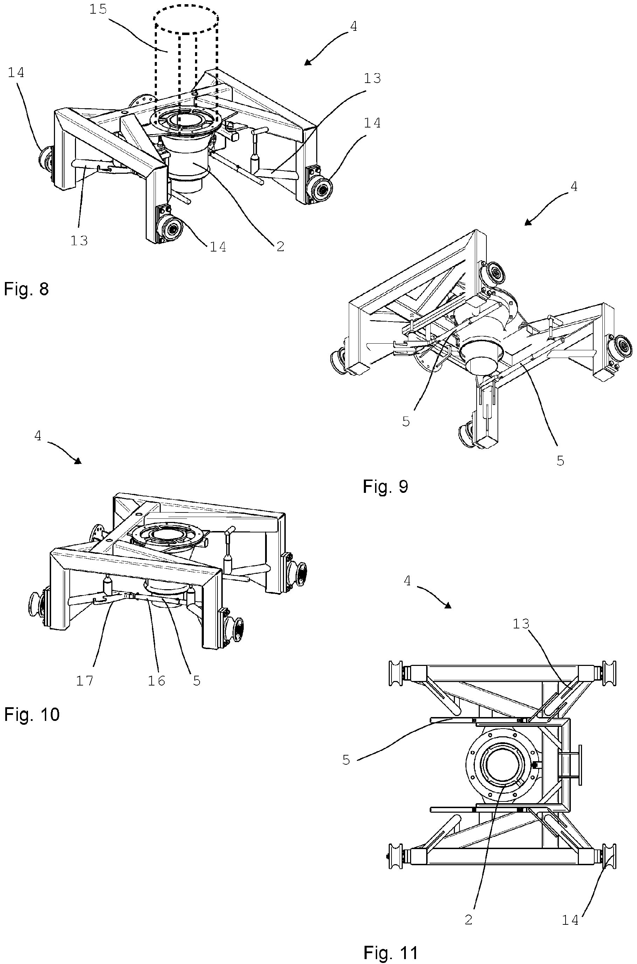

In Figur 8 bis 11 sind rein schematisch mehrere Ansichten von einer Ausführungsform einer Rahmeneinrichtung 4 für eine erfindungsgemäße Abfüllvorrichtung 1 eines erfindungsgemäßen Abfüllsystems 100 dargestellt. Auch hier erkennt man die im Wesentlichen V-förmige Ausgestaltung der Rahmeneinrichtung 4, wobei mehrere Rollen 14 vorgesehen sind, um die Rahmeneinrichtung 4 verfahrbar bzw. verlagerbar auszugestalten.

In dem gezeigten Ausführungsbeispiel ist der Füllstutzen 2 in die Rahmeneinrichtung 4 hinunter verlagert, wobei ein entsprechendes Füllrohr 15 von oben in Kontakt zu dem Füllstutzen 2 gebracht werden kann.

In den hier gezeigten Darstellungen erkennt man, dass die Hilfseinrichtung 5 hier als Stange 16 mit einem Haken 17 ausgebildet ist, wobei die Hilfseinrichtung 5 in dem hier gezeigten Ausführungsbeispiel verliersicher an der Rahmeneinrichtung 4 aufgenommen ist. So ist sichergestellt, dass ein Bediener immer eine Hilfseinrichtung 5 zur Verfügung hat, wenn er einen Bigbag 300 an eine Rahmeneinrichtung 4 anhängen oder abnehmen muss.

In anderen nicht dargestellten Ausführungen kann die Hilfseinrichtung 5 auch anders ausgebildet sein und auch an der Trennvorrichtung 50 und/oder anderen Komponenten der Abfüllvorrichtung 1 befestigt und vorzugsweise verliersicher aufgenommen sein.

### Bezugszeichenliste

| | | | |
|---|---|---|---|
| 1 | Abfüllvorrichtung | | |
| 2 | Füllstutzen | 100 | Abfüllsystem |
| 3 | Abfüllbereich | 101 | Schleuseneinrichtung |
| 4 | Rahmeneinrichtung | 102 | Low-Care-Bereich |
| 5 | Hilfseinrichtung | 103 | Medium-Care-Bereich |
| 6 | Anhängestation | 104 | High-Care-Bereich |
| 7 | Füllstation | | |
| 8 | Ruhestation | 200 | Sack |
| 9 | Abnahmeeinrichtung | 201 | Schlaufe |
| 10 | Schiene | | |
| 11 | Station | 300 | Bigbag |
| 12 | Roboter | | |
| 13 | Aufnahme | | |
| 14 | Rollen | | |
| 15 | Füllrohr | | |
| 16 | Stab | | |
| 17 | Haken | | |
| 18 | Sackzufuhreinrichtung | | |
| 19 | Schleusentor | | |
| 20 | Sackabfuhreinrichtung | | |
| 21 | Fördereinrichtung | | |
| 22 | Schleusentor | | |
| 23 | Schublade | | |
| 50 | Trennvorrichtung | | |
| 51 | Arbeitsbereich | | |
| 52 | Handhabungsabschnitt | | |
| 53 | Durchführung | | |
| 54 | Glas | | |
| 55 | Acrylglas | | |
| 56 | Kunststoff | | |
| 57 | Ausformung | | |
| 58 | Trennelement | | |
| 59 | Handschuh | | |
| 60 | Verschlusseinrichtung | | |
| 61 | Scheibe | | |
| 62 | Folie | | |

## Patentansprüche

1. Abfüllsystem (100) umfassend wenigstens eine Abfüllvorrichtung (1) zum Füllen von pulverförmigen oder anders rieselfähigen bzw. schüttfähigen bzw. fließfähigen Produkten und insbesondere Lebensmitteln in Bigbags (300) und wenigstens eine Trennvorrichtung (50), wobei die Abfüllvorrichtung (1) wenigstens eine Rahmeneinrichtung (4), an welche ein zu füllender Bigbag (300) angehängt wird, und wenigstens einen Füllstutzen (2) umfasst, wobei mit dem Füllstutzen (2) wenigstens ein zu füllender Bigbag (300) durch einen Bediener verbindbar ist, wobei wenigstens die Trennvorrichtung (50) dazu geeignet und ausgebildet ist, wenigstens einen Abfüllbereich (3) der Abfüllvorrichtung (1) von wenigstens einem Arbeitsbereich (51) für einen Bediener abzutrennen, wobei die Trennvorrichtung (50) wenigstens einen Handhabungsabschnitt (52) mit wenigstens einer Durchführung (53) aufweist, durch welche ein Bediener wenigstens abschnittsweise hindurchgreifen kann, um einen an der Rahmeneinrichtung (4) angehängten Bigbag (300) mit dem Füllstutzen (2) zu verbinden, und wobei die Abfüllvorrichtung (1) mehrere Stationen (6, 7, 8) umfasst, wobei die Rahmeneinrichtung fahrbar ausgestaltet ist und in der Abfüllvorrichtung auf wenigstens einer Schiene oder dergleichen zwischen den Stationen (6, 7, 8) verfahren werden kann.

2. Abfüllsystems nach Anspruch 1, wobei die Trennvorrichtung wenigstens abschnittsweise eine hygienische Abtrennung zwischen dem Abfüllbereich und dem Arbeitsbereich bereitstellt.

3. Abfüllsystem (100) nach einem der vorhergehenden Ansprüche, wobei die Trennvorrichtung (50) wenigstens abschnittsweise transparent ausgebildet ist, und/oder wobei die Trennvorrichtung (50) wenigstens abschnittsweise aus Glas (54), Acrylglas (55) und/oder Kunststoff (56) besteht.

4. Abfüllsystem (100) nach einem der vorhergehenden Ansprüche, wobei die Trennvorrichtung (50) wenigstens abschnittsweise flexibel ausgebildet ist und/oder wobei die Trennvorrichtung (50) wenigstens abschnittsweise wenigstens eine Ausformung (57) aufweist.

5. Abfüllsystem (100) nach einem der vorhergehenden Ansprüche, wobei wenigstens ein wenigstens abschnittsweise flexibles Trennelement (58) an der Durchführung (53) angeordnet ist, welches den Abfüllbereich (3) von dem Arbeitsbereich (51) trennt, wobei das Trennelement (58) insbesondere wenigstens einen Handschuh (59) umfasst und/oder wobei das Trennelement (58) insbesondere wenigstens abschnittsweise wechselbar ausgestaltet ist.

6. Abfüllsystem (100) nach einem der vorhergehenden Ansprüche, wobei der wenigstens einen Durchführung (53) wenigstens eine Verschlusseinrichtung (60) zugeordnet ist.

7. Abfüllsystem (100) nach einem der vorhergehenden Ansprüche, wobei der Arbeitsbereich (51) für einen Bediener und/oder die Abfüllvorrichtung (1) über wenigstens eine Schleuseneinrichtung (101) erreichbar ist und/oder wobei der Arbeitsbereich (51) für einen Bediener in wenigstens einer Schleuseneinrichtung (101) angeordnet ist.

8. Abfüllsystem (100) nach einem der vorhergehenden Ansprüche, wobei die Abfüllvorrichtung (1) und/oder der Arbeitsbereich (51) für einen Bediener in einem High-Care-Bereich (104) angeordnet sind, wobei insbesondere die Abfüllvorrichtung (1) in einem High-Care-Bereich (104) und der Arbeitsbereich (51) für einen Bediener in einer Schleuseneinrichtung (101) angeordnet ist.

9. Abfüllsystem (100) nach einem der vorhergehenden Ansprüche, wobei der Trennvorrichtung (50) und/oder der Abfüllvorrichtung (1) wenigstens eine Hilfseinrichtung (5) zugeordnet ist, wobei die Hilfseinrichtung (5) insbesondere an der Trennvorrichtung (50) und/oder der Abfüllvorrichtung (1) aufgenommen ist, insbesondere an der Rahmeneinrichtung (4) .

10. Abfüllsystem (100) nach einem der vorhergehenden Ansprüche, wobei an wenigstens zwei Stationen (6, 7, 8) wenigstens ein Handhabungsabschnitt (52) in der wenigstens einen Trennvorrichtung (50) vorgesehen ist.

11. Abfüllsystem (100) nach einem der vorhergehenden Ansprüche, wobei wenigstens eine Sackzufuhreinrichtung (18) zum Zuführen von leeren Bigbags (300) zu der Abfüllvorrichtung (1) vorgesehen ist, wobei die Sackzufuhreinrichtung (18) insbesondere wenigstens ein Schleusentor (19) und/oder eine Schublade (23) umfasst.

12. Abfüllsystem (100) nach einem der vorhergehenden Ansprüche, wobei wenigstens eine Abnahmeeinrichtung (9) vorgesehen ist.

13. Abfüllsystem (100) nach einem der vorhergehenden Ansprüche, wobei wenigstens eine Sackabfuhreinrichtung (20) zum Abführen von vollen Bigbags (300) aus der Abfüllvorrichtung (1) vorgesehen ist, wobei die Sackabfuhreinrichtung (20) insbesondere wenigstens eine Fördereinrichtung (21) und/oder wenigstens ein Schleusentor (22) umfasst.

14. Verfahren zum Befestigen wenigstens eines Bigbags (300) an wenigstens einem Füllstutzen (2) wenigstens einer Abfüllvorrichtung (1) eines Abfüllsystems (100) nach einem der vorhergehenden Ansprüche, wobei ein Bediener durch die wenigstens eine Durchführung (53) in dem Handhabungsabschnitt (52) der Trennvorrichtung (50) wenigstens abschnittsweise in den Abfüllbereich (3) hineingreift und den an der Rahmeneinrichtung (4) hängenden Bigbag (300) mit dem Füllstutzen (2) verbindet.

15. Verfahren nach dem vorhergehenden Anspruch, wobei der Bediener in wenigstens ein Trennelement (58), insbesondere in wenigstens einen Handschuh (59), eingreift, um durch die Trennvorrichtung (50) in den Abfüllbereich zu gelangen und/oder wobei ein Bigbag (300) mit wenigstens einer Schlaufe (201) an wenigstens eine Rahmeneinrichtung (4) angehängt wird, wobei vorzugsweise die Schlaufe (201) mittels wenigstens einer Hilfseinrichtung (5) an die Rahmeneinrichtung (4) angehängt wird.

## Claims

1. A filling system (100), comprising
at least one filler (1) for filling big bags (300) with pulverulent or otherwise pourable or bulk or flowable products and in particular foodstuffs, and at least one partition (50),
wherein the filler (1) comprises at least one frame apparatus (4), from which a big bag (300) to be filled is suspended, and at least one filling neck (2), wherein at least one big bag (300) to be filled can be connected to the filling neck (2) by an operator, and
wherein at least the partition (50) is suitable and designed for separating at least one filling region (3) of the filler (1) from at least one working region (51) for an operator, **characterised in that**
the partition (50) has at least one handling section (52) with at least one through-hole (53) through which an operator can reach at least in part in order to connect a big bag (300) suspended from the frame apparatus (4) to the filling neck (2), and the filler (1) comprises multiple stations (6, 7, 8), wherein the frame apparatus is movable and can be moved in the filler between the stations (6, 7, 8) on at least one rail or the like.

2. The filling system according to Claim 1, wherein the partition provides, at least in some sections, a hygienic separation of the filling region from the working region.

3. The filling system (100) according to one of the preceding claims, wherein the partition (50) is transparent at least in some sections, and/or wherein the partition (50) consists at least in some sections of glass (54), acrylic glass (55) and/or plastic (56).

4. The filling system (100) according to one of the preceding claims, wherein the partition (50) is flexible at least in some sections, and/or wherein the partition (50) has at least in some sections at least one moulded portion (57).

5. The filling system (100) according to one of the preceding claims, wherein at least one partition element (58), which is flexible at least in some sections, is arranged at the through-hole (53) and separates the filling region (3) from the working region (51), wherein the partition element (58) in particular comprises at least one glove (59) and/or wherein the partition element (58) is exchangeable in particular at least in some sections.

6. The filling system (100) according to one of the preceding claims, wherein the at least one through-hole (53) is assigned at least one closure apparatus (60).

7. The filling system (100) according to one of the preceding claims, wherein the working region (51) for an operator and/or the filler (1) can be reached via at least one lock apparatus (101), and/or wherein the working region (51) for an operator is arranged in at least one lock apparatus (101).

8. The filling system (100) according to one of the preceding claims, wherein the filler (1) and/or the working region (51) for an operator are arranged in a high-care region (104), wherein in particular the filler (1) is arranged in a high-care region (104), and the working region (51) for an operator is arranged in a lock apparatus (101).

9. The filling system (100) according to one of the preceding claims, wherein the partition (50) and/or the filler (1) are assigned at least one aid (5), wherein the aid (5) is in particular held on the partition (50) and/or on the filler (1), in particular on the frame apparatus (4).

10. The filling system (100) according to one of the preceding claims, wherein at least one handling section (52) is provided in the at least one partition (50) at at least two stations (6, 7, 8).

11. The filling station (100) according to one of the preceding claims, wherein at least one sack supply apparatus (18) for supplying empty big bags (300) to the filler (1) is provided, wherein the sack supply apparatus (18) in particular comprises at least one lock gate (19) and/or a drawer (23).

12. The filling system (100) according to one of the preceding claims, wherein at least one removal apparatus (9) is provided.

13. The filling station (100) according to one of the preceding claims, wherein at least one sack discharge apparatus (20) for discharging full big bags (300) from the filler (1) is provided, wherein the sack discharge apparatus (20) in particular comprises at least one conveying apparatus (21) and/or at least one lock gate (22).

14. A method for fastening at least one big bag (300) to at least one filling neck (2) of at least one filler (1) of a filling system (100) according to one of the preceding claims, **characterised in that**
an operator reaches through the at least one through-hole (53) in the handling section (52) of the partition (50) into the filling region (3) at least in part and connects the big bag (300) suspended from the frame apparatus (4) to the filling neck (2).

15. The method according to the preceding claim, wherein the operator reaches into at least one partition element (58), in particular into at least one glove (59), in order to access the filling region through the partition (50), and/or wherein a big bag (300) is suspended from at least one frame apparatus (4) by at least one loop (201), wherein the loop (201) is preferably suspended from the frame apparatus (4) by means of at least one aid (5).

## Revendications

1. Système de remplissage (100) comprenant
au moins un dispositif de remplissage (1) destiné à charger des produits pulvérulents ou en vrac ou fluides et notamment des produits alimentaires dans des big-bags (300) et au moins un dispositif de séparation (50),
le dispositif de remplissage (1) comprenant au moins un moyen formant cadre (4), sur lequel on accroche un big-bag (300) qui doit être rempli et au moins une tubulure de remplissage (2), au moins un big-bag (300) qui doit être rempli pouvant être raccordé par un opérateur sur la tubulure de remplissage (2) et
au moins le dispositif de séparation (50) étant apte à et conçu pour séparer au moins une zone de remplissage (3) du dispositif de remplissage (1) d'au moins une zone de travail (51) pour un opérateur,
**caractérisé en ce que** le dispositif de séparation (50) comporte au moins un segment de manipulation (52) pourvu d'au moins un passage (53), à travers lequel un opérateur peut passer la main au moins par endroits, pour raccorder un big-bag (300) accroché sur le moyen formant cadre (4) avec la tubulure de remplissage (2) et **en ce que** le dispositif de remplissage (1) comprend plusieurs postes (6, 7, 8), le moyen formant cadre étant conçu de manière déplaçable et pouvant être déplacé dans le dispositif de remplissage sur au moins un rail ou similaire entre les postes (6, 7, 8).

2. Système de remplissage selon la revendication 1, le dispositif de séparation mettant à disposition au moins par endroits une séparation hygiénique entre la zone de remplissage et la zone de travail.

3. Système de remplissage (100) selon l'une quelconque des revendications précédentes, le dispositif de séparation (50) étant conçu au moins par endroits en étant transparent et / ou le dispositif de séparation (50) étant constitué au moins par endroits en verre (54), en verre acrylique (55) et / ou en matière plastique (56).

4. Système de remplissage (100) selon l'une quelconque des revendications précédentes, le dispositif de séparation (50) étant conçu au moins par endroits de manière souple et / ou le dispositif de séparation (50) comportant au moins par endroits au moins une empreinte (57).

5. Système de remplissage (100) selon l'une quelconque des revendications précédentes, au moins un élément de séparation (58) souple au moins par endroits, lequel sépare la zone de remplissage (3) de la zone de travail (51) étant placé sur le passage (53), l'élément de séparation (58) comprenant notamment au moins gant (59) et / ou l'élément de séparation (58) étant conçu au moins par endroits de manière interchangeable.

6. Système de remplissage (100) selon l'une quelconque des revendications précédentes, à l'au moins un passage (53) étant associé au moins un moyen de fermeture (60).

7. Système de remplissage (100) selon l'une quelconque des revendications précédentes, la zone de travail (51) étant atteignable par un opérateur et / ou le dispositif de remplissage (1) étant atteignable par l'intermédiaire d'au moins un moyen formant sas (101) et / ou la zone de travail (51) pour un opérateur étant placée dans au moins un moyen formant sas (101).

8. Système de remplissage (100) selon l'une quelconque des revendications précédentes, le dispositif de remplissage (1) et / ou la zone de travail (51) pour un opérateur étant placés dans une zone de high-care (104), notamment le dispositif de remplissage (1) étant placé dans une zone de high-care (104) et la zone de travail (51) pour un opérateur étant placée dans un moyen formant sas (101).

9. Système de remplissage (100) selon l'une quelconque des revendications précédentes, au dispositif de séparation (50) et / ou au dispositif de remplissage (1) étant associé au moins un moyen auxiliaire (5), le moyen auxiliaire (5) étant réceptionné notamment sur le dispositif de séparation (50) et / ou le dispositif de remplissage (1), notamment sur le moyen formant cadre (4).

10. Système de remplissage (100) selon l'une quelconque des revendications précédentes, sur au moins deux postes (6, 7, 8) étant prévu au moins un segment de manipulation (52) dans l'au moins un dispositif de séparation (50).

11. Système de remplissage (100) selon l'une quelconque des revendications précédentes, au moins un moyen d'alimentation de sacs (18) étant prévu pour alimenter des big-bags (300) vides vers le dispositif de remplissage (1), le moyen d'alimentation de sacs (18) comprenant notamment au moins un porte de sas (19) et / ou un tiroir (23).

12. Système de remplissage (100) selon l'une quelconque des revendications précédentes, au moins un moyen d'enlèvement (9) étant prévu.

13. Système de remplissage (100) selon l'une quelconque des revendications précédentes, au moins un moyen d'évacuation des sacs (20) étant prévu pour évacuer des big-bags (300) pleins hors du dispositif de remplissage (1), le moyen d'évacuation des sacs (20) comprenant notamment au moins un moyen de convoyage (21) et / ou au moins une porte de sas (22) .

14. Procédé, destiné à fixer au moins un big-bag (300) sur au moins une tubulure de remplissage (2) d'au moins un dispositif de remplissage (1) d'un système de remplissage (100) selon l'une quelconque des revendications précédentes, **caractérisé en ce qu'**un opérateur passe la main par l'au moins un passage (53) dans le segment de manipulation (52) du dispositif de séparation (50) au moins par endroits dans la zone de remplissage (3) et raccorde le big-bag (300) accroché sur le moyen formant cadre (4) sur la tubulure de remplissage (2) .

15. Procédé selon la revendication précédentes, l'opérateur passant la main dans au moins un élément de séparation (58), notamment dans au moins un gant (59), pour arriver à travers le dispositif de séparation (50) dans la zone de remplissage et / ou un big-bag (300) étant accroché par au moins une boucle (201) sur au moins un moyen formant cadre (4), de préférence la boucle (201) étant accrochée à l'aide d'au moins un moyen auxiliaire (5) sur le moyen formant cadre (4).
